# EUROPÄISCHE PATENTSCHRIFT

(11) **EP 1 244 203 B1**
(45) Veröffentlichungstag und Bekanntmachung des Hinweises auf die Patenterteilung: **02.10.2013**
(21) Anmeldenummer: 01130145.4
(22) Anmeldetag: 19.12.2001
(51) Int. Cl.: H02M 1/00, H02J 3/38, H02M 5/458, H02M 7/493

(54) **Stromrichterschaltungsanordnung für Generatoren mit dynamisch veränderlicher Leistungsabgabe**
Power converter circuit for generators with dynamically varying outputpower
Circuit convertisseur pour des générateurs avec puissance variable dynamiquement

(30) Priorität: 22.03.2001 DE 10114075
(43) Veröffentlichungstag der Anmeldung: 25.09.2002
(73) Patentinhaber: SEMIKRON Elektronik GmbH & Co. KG, 90431 Nürnberg (DE)
(72) Erfinder: Schreiber, Dejan, 90513 Zirndorf (DE)

(56) Entgegenhaltungen:
- EP-A- 0 891 037
- WO-A-00/21186
- WO-A-93/11604
- DE-A- 19 614 627
- DE-A- 19 941 170
- US-A- 5 315 159
- PATENT ABSTRACTS OF JAPAN Bd. 018, Nr. 586 (E-1627), 9. November 1994 (1994-11-09) & JP 06 217553 A (TOSHIBA CORP.), 5. August 1994 (1994-08-05)

## Beschreibung

Die Erfindung beschreibt eine Stromrichterschaltungsanordnung für den Einsatz als Wandler zwischen einem Generator mit dynamisch variierender Ausgangsleistung und einem Mittelspannungsstromnetz. Derartige dynamisch variierende Ausgangsleistungen treten beispielhaft bei Windenergieanlagen auf, da hier die abgegebene Leistung abhängig von der Windgeschwindigkeit ist. Die erzeugten Ströme werden typischerweise in Stromnetze mit bis zu einigen 10kV Spannung und Frequenzen von 50Hz oder 60Hz eingespeist.

Der Stand der Technik bei Anwendung wie Windenergieanlagen mit zeitlich variierender dynamischer Leistungsabgabe der Strom erzeugenden Generatoren wird gebildet durch folgenden Technologien.

Für Leistungen der Stromerzeugung bis ca. 1MW finden Generatoren mit Spannungen bis 690V Einsatz, damit liegt die Spannung im Zwischenkreis bzw. in der Gleichstromverbindung zum Stromrichter bei ca. 1100V. In den zugehörigen Stromrichterschaltungen werden häufig IGBTs (insulated gate bipolar transistor) der Spannungsklassen 1200V bzw. 1700V als Leistungsschalter eingesetzt. Für höhere Leistungen sind diese Zwischenkreisspannungen von 1100V allerdings zu gering, da sich hier die Verluste, z.B. in den Verbindungsleitungen überproportional erhöhen.

Daher werden bei Stromerzeugung mit Leistungen ab ca. 1MW Mittelspannungsgeneratoren der genormten Spannungsklassen von 2,2kV, 3,3kV, 4,16kV und 6,3kV eingesetzt. Die hohen daraus resultierenden Zwischenkreisspannungen bedingen hochsperrende Leistungsschalter wie IGBT oder IGCT (integrated gate commutated thyristor). Diese hochsperrenden Varianten weisen allerdings den Nachteil auf, dass die Schaltverluste um den Faktor 3 bis 10 über denen der Standardvarianten liegen.

Als Generatoren werden für die vorgenannten Technologien Asynchronmaschinen verwendet. Diese robusten Generatoren bedingen allerdings Vier- Quadranten- Umrichter für ihren Einsatz, wie sie beispielhaft in der DE 198 32 225 A1 und DE 198 32 226 A1 beschrieben wurden, da diese Generatoren zur Erregung einen Eingangsstrom benötigen, der über den Vier- Quadranten- Umrichter eingespeist und geregelt wird.

Zum Stand der Technik zählen weiterhin Stromerzeugungen mit Synchronmaschinen als Generatoren. Beispielhaft werden bei den hier bekannten Stromerzeugungen die gleichgerichteten Ausgangsspannungen mehrerer Generatoren mit einer gemeinsamen Stromrichterschaltung verbunden. Hierbei finden, mittels Transformatoren und nachgeschalteten Gleichrichtern erzeugte, Gleichspannungen in den Verbindungen zu den Stromrichtern Verwendung, die in der Größenordnung von 100kV liegen, da hier die Leitungsverluste gering sind. Als Leistungsschalter finden hier eine große Zahl von in Reihe geschalteten hochsperrenden IGBTs oder IGCTs Verwendung. Die hohe Zwischenkreisspannung hat allerdings den Nachteil, dass sich bei derartigen Zwischenkreisspannungen und relativ langsamen Schaltzeiten von typischerweise 1µs Momentanwerte der Spannungänderung von 100kV/µs ergeben. Damit derart hohe Werte der Spannungsänderung nicht zu Zerstörungen der Spulen, wie sie sich im Generator und Transformator befinden, führen müssen zusätzliche passive LC- Glieder als Filter integriert werden. All diese Anforderungen erhöhen den Aufwand und somit auch die Kosten derartiger Stromerzeugungen. Zudem sind diese vorgenannten Stromrichterschaltungen nicht flexibel an Generatoren unterschiedlicher Spannungs- und Leitungsklassen anpassbar.

Ein weiterer Nachteil der Verwendung nur einer Stromrichterschaltung für mehrere dynamisch in ihrer Leistungsabgabe arbeitende Generatoren liegt darin begründet, dass diese bedingt durch ihre konstante Erregung nicht mit identischer Drehzahl und damit auch nicht mit identischer Ausgangsspannung arbeiten. Daher werden verschiedene Arten von Regelmechanismen eingesetzt, denen alle ein Steigerung der Verluste in der Stromerzeugung zu eigen ist.

Die vorliegende Erfindung hat die Aufgabe eine hohe Qualität der Netzspannung erzeugende, bereits bei geringen Ausgangsleistungen und über den gesamten Leistungsbereich mit hohem Wirkungsgrad zuverlässig arbeitende Stromrichterschaltung vorzustellen, die die zeitlich variable Ausgangsleistung eines stromerzeugenden Mittelspannungsgenerators in ein Hochspannungsnetz einspeist, wobei die variable Ausgangsleistung begründet ist in einer variablen Drehzahl des Generators, die direkt zu einer variablen Ausgangsspannung und auch zu einer variablen Ausgangsfrequenz führt; weiterhin soll die Stromrichterschaltungsanordnung für unterschiedlich hohe Leistungen von Generatoren leicht anzupassen sein, sowie tolerant gegenüber dem Ausfall einzelner Leistungsschalter sein, wobei dies nicht zum Ausfall oder zur Leistungsminderung der Stromerzeugung führen darf.

Näheres zum Stand der Technik offenbart WO 00/21186, die eine elektrische Energieübertragungsanlage zur Übertragung von elektrischer Energie von einem eine erste Wechselspannung erzeugenden Generator über eine Übertragungsleitung in ein elektrisches Wechselspannungsnetz betrifft, mit einer Schaltungsanordnung, die die vom Generator erzeugte erste Wechselspannung in eine erste Gleichspannung umwandelt und in die Übertragungsleitung einspeist, und mit einem ersten Wechselrichter, der am Ausgang der Übertragungsleitung angeschlossen ist und die erste Gleichspannung in eine zweite Wechselspannung umwandelt und in das Wechselspannungsnetz einspeist. Konkrete wird eine elektrische Energieübertragungsanlage zur Übertragung von elektrischer Energie von einem eine erste Wechselrichterspannung erzeugenden Generator über eine Übertragungsleitung in ein elektrisches Wechselspannungsnetz offenbart, mit einer Schaltungsanordnung, die die vom Generator erzeugte erste Wechselspannung in eine erste Gleichspannung umwandelt und in die Übertragungsleitung einspeist, und einem ersten Wechselrichter, der am Ausgang der Übertragungsleitung angeschlossen ist und die erste Gleichspannung in eine zweite Wechselspannung umwandelt und in das Wechselspannungsnetz einspeist, wobei die Schaltungsanordnung eine Stromrichterschaltung, die die vom Generator erzeugte erste Wechselspannung in eine dritte Wechselspannung umwandelt, einen ersten Transformator, der die dritte Wechselspannung in eine vierte Wechselspannung umwandelt, und einen ersten Gleichrichter, der die vierte Wechselspannung in die erste Gleichspannung umwandelt, aufweist.

WO 93/11604 offenbart einen Windturbinenleistungswandler zur Glättung einer Ausgangsleistung aus einer Windturbine variabler Geschwindigkeit, um Leistungsschwankungen an der Ausgangsleitung zu vermindern. Der Leistungsumwandler weist einen generatorseitigen AC-DC-Wandler, der mit einem Generator variabler Geschwindigkeit verbunden ist, der Windenergie in elektrische Energie umwandelt, einen leitungsseitigen DC-AC-Inverter, der mit einem öffentlichen Stromnetz verbunden ist, und eine DC-Spannungsverbindung auf, die mit einer Speichereinrichtung für elektrische Energie - wie einer Batterie oder einer Brennstoffzelle oder einer Photovoltaik- oder Solarzelle - verbunden ist. Ein Inverter-Controller und ein Leistungscontroller regeln den Strom mittels aktiver Schalter am leitungsseitigen Inverter, um dem Stromnetz eine gewählte Kombination aus reeller und reaktiver Leistung zu liefern.

DE 196 14 627 offenbart ein Stromrichtersystem zur Speisung wenigstens eines Verbrauchers aus einem Hochspannungsspannungsnetz, wobei das Stromrichtersystem mehrere Teilstromrichtersysteme enthält, und jedes Teilstromrichterssystem wenigstens einen Eingangsstromrichter, einen Spannungszwischenkreis und einen Wechselrichter enthält, wobei Mittel vorhanden sind, die jeweils ohne Vor-, Zwischen- oder Nachschaltung eines Transformators a) im Fall einer Einspeisung einer hohen Wechselspannung eine Serienschaltung der Eingangsstromrichter der Teilstromrichtersysteme durchführen, und b) im Fall einer Einspeisung einer Gleichspannung eine parallele Einspeisung in die Spannungszwischenkreise der Teilstromrichtersysteme durchführen.

Die Erfindung sieht eine Stromrichterschaltung gemäß Anspruch 1 vor. Bevorzugte Ausführungsformen der Erfindung sind in den Unteransprüchen beschrieben.

Die beanspruchte Erfindung lässt sich durch die in dieser Schrift, d.h. in der vorliegenden Beschreibung sowie in den Zeichnungen, beschriebenen und dargestellten Ausführungsbeispiele besser verstehen. Im Allgemeinen spiegelt die vorliegende Offenbarung bevorzugte Ausführungsbeispiele der Erfindung. Dem aufmerksamen Leser wird jedoch auffallen, dass einige Aspekte der beschriebenen Ausführungsbeispiele über den Schutzumfang der Ansprüche hinausragen. Sofern die beschriebenen Ausführungsbeispiele tatsächlich über den Schutzumfang der Ansprüche hinausragen, sind die beschriebenen Ausführungsbeispiele als zusätzliches Hintergrundinformation zu betrachten und stellen keine Definition der Erfindung per se dar.

Eine Stromerzeugung gemäß einer Ausgestaltung der vorliegenden Offenbarung besteht aus folgenden wesentlichen Komponenten:

Die direkt nachgeschaltete Gleichrichterschaltungsanordnung erzeugt hieraus eine Gleichspannung zwischen 0V und ca. 1,35 x Ugen. Als Bauelemente für diese Gleichrichterschaltungsanordnung kommen nach dem Stand der Technik vorzugsweise Dioden oder Thyristoren zum Einsatz. Wobei Thyristoren den Vorteil aufweisen, die Gleichspannungsübertragungsleitungen im Fall einer Störung vom Generator abkoppeln zu können.

Die nachfolgende Gleichspannungsleitung verbindet die Gleichrichterschaltungsanordnung mit dem Stromrichter. Dieser besteht in einer Ausgestaltung aus einer kaskadierten, seriellen Anordnung von erfinderischen "Stromrichterzellen", wobei jede dieser Stromrichterzellen ihrerseits aufgebaut ist aus:
- Einem Überbrückungsschalter zur Überbrückung bzw. Abschaltung der Stromrichterzelle;
- Einer Eingangsdiode;
- Mindestens einem Zwischenkreiskondensator;
- Einer mindestens einphasigen Brückenschaltung, vorzugsweise einer 3- Phasen-Brückenschaltung, für jede Phase bestehend aus je einem Leistungsschalter in TOPsowie einem in BOT- Position mit jeweils mindestens einer parallel geschalteten Freilaufdiode. Jeder der Leistungsschalter besteht seinerseits vorzugsweise aus einer Parallelschaltung mehrerer Leistungstransistoren vorzugsweise IGBTs der Standardtypen, da diese gegenüber hochsperrenden Varianten geringere Verluste im Betrieb aufweisen;
- Einer Netzdrossel pro Phase;
- Je Phase einer Primärwicklung des Mittelspannungstransformators.

Die für einen Stromrichter gegebener Maximalleistung mindestens erforderliche Anzahl von Stromrichterzellen ergibt sich direkt durch Division der maximalen vom Generator mit nachgeschalteter Gleichrichterschaltung erzeugten Gleichspannung mit der maximalen Zwischenkreisspannung einer Stromrichterzelle. Eine höhere als diese minimale Anzahl von Stromrichterzellen führt zu einer Redundanz innerhalb des Stromrichters, deren Nutzen im weiteren noch beschrieben wird.

Im folgenden wird die erfinderische Verwendung der Stromrichterzellen beschrieben. Die für eine effiziente Stromerzeugung minimale Leistung bestimmt sich aus der Zwischenkreisspannung einer einzelnen Stromrichterzelle.

Die übergeordnete Steuerung wird bei einer Zwischenkreisspannung kleiner oder gleich der maximalen Zwischenkreisspannung Uz,max einer Stromrichterzelle nur eine beliebige Stromrichterzelle verwenden, alle anderen Stromrichterzellen sind mittels ihres Überbrückungsschalters überbrückt und somit nicht aktiv. Die gesamte Schaltungsanordnung arbeitet nun wie eine 3- Phasen- Brückenschaltung mit Eingangsgleichrichter nach dem Stand der Technik.

Eine Erhöhung der Drehzahl des Generators führt zu einer Erhöhung der Generatorspannung sowie der gleichgerichteten Übertragungsgleichspannung. Sobald diese den Maximalwert der Zwischenkreisspannung einer Stromrichterzelle überschritten hat, wird durch die übergeordnete Steuereinheit eine weitere Stromrichterzelle zugeschaltet. Es sind nun zwei Stromrichterzellen aktiv, wobei die Spannung zu gleichen Teilen auf diese aufgeteilt ist und beide wieder in ihrem idealen Arbeitsbereich arbeiten können. Alle weiteren Zellen sind mittels ihrer Überbrückungsschalter überbrückt und inaktiv. Die übergeordnete Steuerung kann in diesem Betriebszustand aus allen Stromrichterzellen zwei beliebige auswählen. Dies Auswahl ist dynamisch, d.h. es kann auch bei konstanter Eingangsleistung, d.h. konstanter Zwischenkreisspannung, dynamisch zwischen verschiedenen Gruppen (hier Zweiergruppen) von aktiven Stromrichterzellen umgeschaltet werden. Dies kann nach einem festen Rhythmus oder aber abhängig von verschieden Parametern, wie beispielhaft der Temperatur der Leistungsschalter, erfolgen.

Eine weitere Erhöhung der Drehzahl des Generators führt zu einer weiteren Erhöhung der Übertragungsgleichspannung. Sobald diese einen durch die Summe der Zwischenkreisspannungen aller aktiven Stromrichterzellen gebildeten Wert überschreitet wird durch die übergeordnete Steuereinheit eine weitere Stromrichterzelle zugeschaltet. Dieses Verfahren wird bis zum Erreichen der Maximalleistung fortgeführt.

Selbstverständlich wird ein analoges Verfahren zur Reduzierung der aktiven Stromrichterzellen angewandt. Dies führt bei zeitlich dynamischem Verhalten der Leistungsabgabe des Generators zu einer zeitlich dynamischen Anzahl von aktiven bzw. passiven, d.h. überbrückten Stromrichterzellen. Die übergeordnete Steuerung kann in jedem Betriebszustand, bei jeder Übertragungsgleichspannung aus allen Stromrichterzellen die benötigte Anzahl beliebig auswählen. Dies Auswahl ist dynamisch, d.h. es kann sowohl bei variierender Eingangsleistung bzw. Zwischenkreisspannung als auch bei konstanter Eingangsleistung bzw. Zwischenkreisspannung, dynamisch zwischen verschiedenen Gruppen von aktiven Stromrichterzellen umgeschaltet werden.

Bei Betrieb des Stromrichters im Leistungsbereich unterhalb der Nennleistung sind nicht alle Stromrichterzellen aktiv. Auch bei redundant aufgebauten Stromrichtern mit einer höheren Anzahl an Stromrichterzellen als zum Betrieb notwendig weist der Stromrichter inaktive Stromrichterzellen auf. Diese Stromrichterzellen können während der Zeiten in denen sie nicht als Stromrichterzellen betrieben werden dem Stromnetz Blindleistung zur Verfügung stellen.

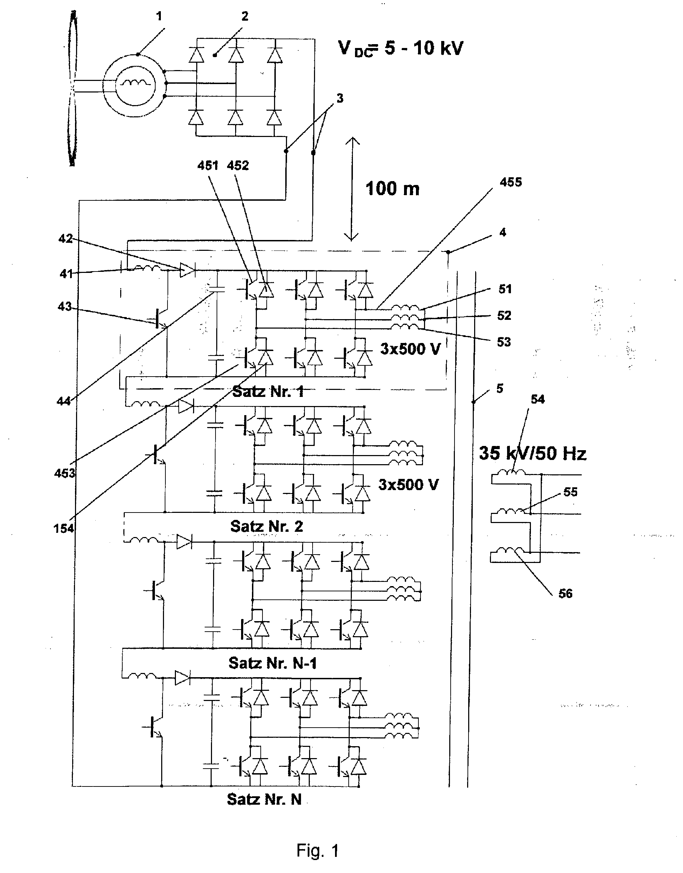

Nachfolgend wird der erfinderische Gedanke anhand der Fig. 1 beispielhaft erläutert.

Fig. 1 zeigt eine 6MW Windkraftanlage bestehend aus
- Einer permanent erregtem Synchronmaschine 1 als Generator mit einer maximalen Ausgangsspannung von 6,6kV.
- Einem direkt daran angeschlossenem Brückengleichrichter 2
- Einer Verbindungleitung 3 der Übertragungsgleichspannung zu einem Stromrichter bestehend aus den erfinderischen Stromrichterzellen 4
- Einem Hochspannungstransformator 5 zur Speisung eines 35kV Hochspannungsnetzes.

Derartige Windenergieanlagen können beispielsweise als Windenergieanlagenpark in Küstengebieten zur Stromerzeugung eingesetzt werden. Typisch für diesen Einsatz ist die variable Drehzahl des Generators bedingt durch die Variation der Windgeschwindigkeiten. Die erfinderische Stromrichterschaltung gestattet eine Stromerzeugung mit hohem Wirkungsgrad und geringem mechanischen Aufwand zwischen einer minimalen und einer maximalen Windgeschwindigkeit beides durch die mechanischen Randbedingungen der Windenergieanlage vorgegebenen.

Die durch den Generator 1 und die nachgeschaltete Gleichrichterschaltungsanordnung 2 erzeugte maximale Übertragungsgleichspannung von ca. 9kV ist mittels einer Gleichspannungsleitung 3 mit den kaskadierten, seriell verschaltenen Stromrichterzellen 4 verbunden. Beim Einsatz von 1700V IGBTs als Leistungstranistoren mit einer typischen Zwischenkreisspannung der Stromrichterzelle von 1080V werden zehn Stromrichterzellen zur Umwandlung der Übertragungsgleichspannung ein 1- oder 3- Phasenwechselspannung benötigt, die ihrerseits mittels eines Transformators Energie in das Hochspannungsnetz (50Hz oder 60Hz) einspeisen. Hierbei ist noch keine Redundanz zum Ersatz einer defekten Stromrichterzelle durch eine andere berücksichtigt. Jede weitere Stromrichterzelle jenseits der zehn Stromrichterzellen kann dazu verwendet werden im Falle eines Ausfalls einer Stromrichterzelle die vollständige Funktion der Stromerzeugung ohne Leistungsverringerung sicher zu stellen.

Jede Stromrichterzelle 4 besteht aus
- Einer parasitären Induktivität 41 der Verbindungsleitung
- Einem Überbrückungsschalter 43 zur Überbrückung der Stromrichterzelle
- Einer Eingangsdiode 42
- Mindestens einem Zwischenkreiskondensator 44
- Einer 3- Phasen- Brückenschaltung, für jede Phase bestehend aus je einem Leistungsschalter in TOP- 451 sowie einem in BOT- 453 Position mit jeweils mindestens einer parallel geschalteter Freilaufdiode 452, 454. Jeder der Leistungsschalter 451, 453 besteht seinerseits aus einer Parallelschaltung mehrerer Leistungstransistoren.

Beginnend bei einer minimalen Verbindungsgleichspannung Uz,min bis hin zu einer Verbindungsgleichspannung gleich der maximalen Zwischenkreisbetriebespannung Uz,max einer Stromrichterzelle von 1200V wird durch die übergeordnete Steuerung, der die Zwischenkreisspannung bekannt ist nur ein Zelle aktiv geschaltet, alle weiteren Zellen sind mittels ihres Überbrückungsschalters 43 überbrückt und somit nicht aktiv. Die gesamte Spannung des Zwischenkreises fällt über der einzigen aktiven Stromrichterzelle ab. Das durch die zelleneigene Steuerung geregelte Ausgangssignal wird in den drei dieser Stromrichterzelle zugeordneten Primärwicklungen 51, 52, 53 des Mittelspannungstransformators 5 auf die entsprechenden Sekundärwicklungen 54, 55, 56 übertragen.

Die übergeordnete Steuerung wird bei konstanter Zwischenkreisspannung alle Stromrichterzellen zyklisch aktiv schalten, um ein gleichmäßige Auslastung und damit eine gleiche Lebensdauer aller Stromrichterzellen zu gewährfeisten.

Beim Anstieg der Verbindungsgleichspannung über 1200V werden durch die übergeordnete Ansteuerung zwei Stromrichterzellen aktiv geschaltet. Die Zwischenkreisspannung fällt nun jeweils zur Hälfte über die beiden Stromrichterzellen ab. Auch in diesem Betriebszustand mit zwei aktiven Zellen werden zyklisch verschiedene Zellenpaare aktiv geschaltet um eine gleichmäßige Belastung aller Stromrichterzellen sicher zu stellen.

Allgemein wird ein Anstieg oder eine Verringerung der Zwischenkreisspannung durch die übergeordnete Steuerung erkannt und weitere Stromrichterzelle aktiv oder bei einer Verringerung inaktiv geschaltet. Somit wird die Zwischenkreisspannung immer über der geeigneten Anzahl von Stromrichterzellen abfallen. Die zyklische Ansteuerung verschiedener Zellengruppen bzw. Einzelzellen wird auch bei zeitlich variierenden Zwischenkreisspannungen aufrecht erhalten.

Die vorhergehende Offenbarung lässt sich wie folgt zusammenfassen:
Punkt 1: Stromrichterschaltung bestehend aus einer Gleichrichterschaltungsanordnung (2) zur Umformung des im Wechselspannungsgenerator (1) erzeugten Wechselstromes in einen Gleichstrom, einer Gleichstromverbindung (3) von der Gleichrichterschaltungsanordnung zu einem Stromrichter, einem Mittelspannungstransformator (5) sowie einer übergeordneten Steuerung, zur Speisung eines Hochspannungsnetzes, wobei die Leistung erzeugt wird durch einen Mittelspannungswechselstromgenerator (1) mit zeitlich variierender Drehzahl, daraus resultierend zeitlich variierender Frequenz, Spannung und Leistung, dadurch gekennzeichnet, dass der Stromrichter aus einer kaskadierten, seriellen Anordnung mehrerer Stromrichterzellen (4) aufgebaut ist, diese Stromrichterzellen (4) von einer übergeordneten Steuerung abhängig von der vom Wechselspannungsgenerator (1) abgegebenen Leistung dynamisch aktiv oder inaktiv geschaltet werden, sowie jede Phase jeder Stromrichterzelle 4 eine primärseitige Wicklung (51, 52, 53) des Mittelspannungstransformators 5 versorgt.
Punkt 2: Stromrichterschaltung nach Punkt 1 dadurch gekennzeichnet, dass der Wechselspannungsgenerator (1) ausgebildet ist als eine Synchronmaschine mit Rotor-Feld-Steuerung oder Permanentmagneten.
Punkt 3: Stromrichterschaltung nach Punkt 1 dadurch gekennzeichnet, dass eine Stromrichterzelle (4) aufgebaut ist aus einem Überbrückungsschalter (43) zur Überbrückung bzw. Abschaltung der Stromrichterzelle, einer Eingangsdiode 42, mindestens einem Zwischenkreiskondensator (44), einer mindestens 1-[[.]], vorzugsweise 3-Phasen-Brückenschaltung sowie pro Phase je einer Drosselspule 455 sowie einer Primärwicklung (51, 52, 53) des Mittelspannungstransformators.
Punkt 4: Stromrichterschaltung nach Punkt 3 dadurch gekennzeichnet, dass jede Phase der Stromrichterzelle besteht aus je einem Leistungsschalter in TOP- 451 sowie einem in BOT- 453 Position (mit jeweils mindestens einer parallel geschalteten Freilaufdiode (452, 454) wobei jeder der Leistungsschalter seinerseits aus einem oder einer Parallelschaltung mehrerer Leistungstransistoren besteht.
Punkt 5: Stromrichterschaltung nach Punkt 4 dadurch gekennzeichnet, dass die Leistungstransistoren aus IGBTs (insulated gate bipolar transistor) bestehen.
Punkt 6: Stromrichterschaltung nach Punkt 1 dadurch gekennzeichnet, dass das Ausgangssignal jeder aktiven Stromrichterzelle durch eine eigenen Steuerschaltung überwacht und geregelt wird.
Punkt 7: Stromrichterschaltung nach Punkt 1 dadurch gekennzeichnet, dass die übergeordnete Steuerung die aktiven Stromrichterzellen nach einem festen Rhythmus und/oder abhängig von mindestens einem gemessenen und/ oder errechnetem Parameter zyklisch aktiv bzw. inaktiv schaltet.
Punkt 8: Stromrichterschaltung nach Punkt 1 dadurch gekennzeichnet, dass durch eine um N höhere Anzahl von Stromrichterzellen als abhängig von der Generatorleistung erforderlich die Funktion der Stromrichterschaltung trotz Ausfall von N Stromrichterzellen ohne Leistungsverlust kompensiert werden kann.
Punkt 9: Stromrichterschaltung nach Punkt 1 dadurch gekennzeichnet, dass die Stromrichterschaltung durch Veränderung der Anzahl von Stromrichterzellen 4 an unterschiedliche Generatorleistungsklassen angepaßt werden kann.
Punkt 10: Stromrichterschaltung nach Punkt 1 dadurch gekennzeichnet, dass im Teillastbetrieb dem Mittelspannungsnetz Blindleistung zur Verfügung gestellt werden kann.

## Patentansprüche

1. Stromrichterschaltung mit
einer Gleichrichterschaltungsanordnung (2) zur Umformung des im Wechselspannungsgenerator (1) erzeugten Wechselstromes in einen Gleichstrom,
einem Stromrichter,
einer Gleichstromverbindung (3) von der Gleichrichterschaltungsanordnung zum Stromrichter,
einem Mittelspannungstransformator (5) zur Speisung eines Hochspannungsnetzes, sowie
einer übergeordneten Steuerung, wobei
die Leistung erzeugt wird durch einen Mittelspannungswechselstromgenerator (1) mit zeitlich variierender Drehzahl, daraus resultierend zeitlich variierender Frequenz, Spannung und Leistung,
der Stromrichter aus einer kaskadierten, seriellen Anordnung mehrerer Stromrichterzellen (4) aufgebaut ist, diese Stromrichterzellen (4) von einer übergeordneten Steuerung abhängig von der vom Wechselspannungsgenerator (1) abgegebenen Leistung dynamisch aktiv oder inaktiv geschaltet werden,
jede Phase jeder Stromrichterzelle 4 eine primärseitige Wicklung (51, 52, 53) des Mittelspannungstransformators 5 versorgt, und **dadurch gekennzeichnet dass**
jede der Stromrichterzellen (4) einen Überbrückungsschalter (43) zur Überbrückung bzw. Abschaltung der Stromrichterzelle (4) aufweist.

2. Stromrichterschaltung nach Anspruch 1, wobei
der Wechselspannungsgenerator (1) ausgebildet ist als eine Synchronmaschine mit Rotor-Feld-Steuerung oder Permanentmagneten.

3. Stromrichterschaltung nach Anspruch 1, wobei
eine Stromrichterzelle (4) aufgebaut ist aus dem Überbrückungsschalter (43), einer Eingangsdiode 42, mindestens einem Zwischenkreiskondensator (44), einer mindestens 1-, vorzugsweise 3-Phasen-Brückenschaltung sowie pro Phase je einer Drosselspule sowie einer Primärwicklung (51, 52, 53) des Mittelspannungstransformators.

4. Stromrichterschaltung nach Anspruch 3, wobei
jede Phase der Stromrichterzelle besteht aus je einem Leistungsschalter in TOP- sowie einem in BOT-Position (451, 453) mit jeweils mindestens einer parallel geschalteten Freilaufdiode (452, 454) wobei jeder der Leistungsschalter seinerseits aus einem oder einer Parallelschaltung mehrerer Leistungstransistoren besteht.

5. Stromrichterschaltung nach Anspruch 4, wobei
die Leistungstransistoren aus IGBTs (insulated gate bipolar transistor) bestehen.

6. Stromrichterschaltung nach Anspruch 1, wobei
das Ausgangssignal jeder aktiven Stromrichterzelle durch eine eigenen Steuerschaltung überwacht und geregelt wird.

7. Stromrichterschaltung nach Anspruch 1, wobei
die übergeordnete Steuerung die aktiven Stromrichterzellen nach einem festen Rhythmus und/oder abhängig von mindestens einem gemessenen und/ oder errechnetem Parameter zyklisch aktiv bzw. inaktiv schaltet.

8. Stromrichterschaltung nach Anspruch 1, wobei
durch eine um N höhere Anzahl von Stromrichterzellen als abhängig von der Generatorleistung erforderlich die Funktion der Stromrichterschaltung trotz Ausfall von N Stromrichterzellen ohne Leistungsverlust kompensiert werden kann.

9. Stromrichterschaltung nach Anspruch 1, wobei
die Stromrichterschaltung durch Veränderung der Anzahl von Stromrichterzellen 4 an unterschiedliche Generatorleistungsklassen angepaßt werden kann.

10. Stromrichterschaltung nach Anspruch 1, wobei
im Teillastbetrieb dem Mittelspannungsnetz Blindleistung zur Verfügung gestellt werden kann.

11. Stromrichterschaltung nach einem der vorhergehenden Ansprüche, wobei mindestens eine Stromrichterzelle (4) aktiv geschaltet wird, wenn die übergeordnete Steuerung einen
Anstieg der Zwischenkreisspannung erkennt, und mindestens eine Stromrichterzelle (4) inaktiv geschaltet wird, wenn die übergeordnete Steuerung eine Verringerung der Zwischenkreisspannung erkennt.

## Claims

1. A power converter circuit with
a rectifier circuit arrangement (2) for converting the alternating current generated in the alternating-current voltage generator (1) into a direct current,
a power converter,
a direct current connection (3) of the rectifier circuit arrangement to a power converter,
a medium voltage transformer (5) for supplying a high voltage network, and also
a superordinate control, wherein
the power is generated by means of a medium voltage alternating current generator (1) with temporally varying rotational speed, and temporally varying frequency, voltage and power resulting therefrom,
the power converter is constructed from a cascaded, serial arrangement of a plurality of power converter cells (4), these power converter cells (4) are dynamically switched active or inactive by a superordinate control as a function of the power output by the alternating-current voltage generator (1), each phase of each power converter cell 4 supplies a primary-side winding (51, 52, 53) of the medium voltage transformer 5, and **characterised in that**
each of the power converter cells (4) has a bridging switch (43) for bridging or switching off the power converter cell (4).

2. The power converter circuit according to Claim 1,
wherein
the alternating-current voltage generator (1) is constructed as a synchronous machine with rotor field control or permanent magnets.

3. The power converter circuit according to Claim 1,
wherein
a power converter cell (4) is constructed from the bridging switch (43), an input diode 42, at least one intermediate circuit capacitor (44), an at least 1, preferably 3 phase bridging circuit and also, per phase, one reactor coil in each case and also a primary winding (51, 52, 53) of the medium voltage transformer.

4. The power converter circuit according to Claim 3,
wherein
each phase of the power converter cell consists of a power switch in TOP and one in BOT position (451, 453) in each case with at least one parallel-connected freewheeling diode (452, 454) in each case, wherein each of the power switches for its part consists of a parallel circuit of a plurality of power transistors.

5. The power converter circuit according to Claim 4,
wherein
the power transistors consist of IGBTs (insulated gate bipolar transistors).

6. The power converter circuit according to Claim 1,
wherein
the output signal of each active power converter cell is monitored and regulated by means of its own control circuit.

7. The power converter circuit according to Claim 1,
wherein
the superordinate control cyclically switches the active power converter cells active or inactive in accordance with a fixed rhythm and/or as a function of at least one measured and/or calculated parameter.

8. The power converter circuit according to Claim 1,
wherein
by means of a number of power converter cells higher by N, which is necessary as a function of the generator power, the function of the power converter circuit can be compensated without power loss in spite of the failure of N power converter cells.

9. The power converter circuit according to Claim 1,
wherein
the power converter circuit can be adapted to different generator performance classes by changing the number of power converter cells 4.

10. The power converter circuit according to Claim 1,
wherein
reactive power can be supplied to the medium voltage network during partial load operation.

11. The power converter circuit according to one of the preceding claims, wherein at least one power converter cell (4) is switched active if the superordinate control detects an increase of the intermediate circuit voltage, and at least one power converter cell (4) is switched inactive if the superordinate control detects a reduction of the intermediate circuit voltage.

## Revendications

1. Circuit convertisseur, comportant :
un montage redresseur (2) pour la transformation en courant continu du courant alternatif généré par le générateur de tension alternative (1),
un convertisseur,
une liaison de courant continu (3) du montage redresseur vers le convertisseur,
un transformateur à moyenne tension (5) pour l'alimentation d'un réseau à haute tension, et
une commande supérieure,
la puissance étant générée par un alternateur à moyenne tension (1) à vitesse de rotation variable dans le temps, la fréquence, la tension et la puissance qui en résultent étant variables dans le temps,
le convertisseur étant constitué d'un agencement en cascade en série de plusieurs cellules de convertisseur (4), lesdites cellules de convertisseur (4) étant dynamiquement activées ou désactivées par une commande supérieure en fonction de la puissance délivrée par le générateur de tension alternative (1), chaque phase de chaque cellule de convertisseur (4) alimentant un enroulement primaire (51, 52, 53) du transformateur à moyenne tension (5), et
**caractérisé en ce que** chaque cellule de convertisseur (4) comporte un commutateur de pontage (43) pour le pontage ou la déconnexion de la cellule de convertisseur (4).

2. Circuit convertisseur selon la revendication 1, dans lequel :
le générateur de tension alternative (1) est réalisé comme moteur machine synchrone à commande de champ rotorique ou à aimants permanents.

3. Circuit convertisseur selon la revendication 1, dans lequel :
une cellule de convertisseur (4) est constituée du commutateur de pontage (43), d'une diode d'entrée (42), d'au moins un condensateur de circuit intermédiaire (44), d'un montage en pont d'au moins 1, préférentiellement de 3 phases, d'une bobine de self par phase, ainsi que d'un enroulement primaire (51, 52, 53) du transformateur à moyenne tension.

4. Circuit convertisseur selon la revendication 3, dans lequel :
chaque phase de la cellule de convertisseur se compose d'un disjoncteur en position haute et d'un disjoncteur en position basse (451, 453) avec chacun au moins une diode de récupération de self-induction (452, 454) montée en parallèle, chaque disjoncteur étant lui-même composé d'un transistor de puissance ou d'un montage parallèle de plusieurs transistors de puissance.

5. Circuit convertisseur selon la revendication 4, dans lequel :
les transistors de puissance sont des IGBT (insulated gate bipolar transistor).

6. Circuit convertisseur selon la revendication 1, dans lequel :
le signal de sortie de chaque cellule de convertisseur active est surveillé et régulé par un circuit de commande propre.

7. Circuit convertisseur selon la revendication 1, dans lequel :
la commande supérieure active ou désactive cycliquement les cellules actives de convertisseur suivant un rythme fixe et/ou en fonction d'au moins un paramètre mesuré et/ou calculé.

8. Circuit convertisseur selon la revendication 1, dans lequel :
le fonctionnement dudit circuit convertisseur peut être compensé sans perte de puissance en dépit de la défaillance de N cellules de convertisseur par un nombre de cellules de convertisseur supérieur de N à celui exigé en fonction de la puissance de générateur.

9. Circuit convertisseur selon la revendication 1, ledit circuit convertisseur pouvant être adapté à différentes classes de puissance de générateur par modification du nombre de cellules de convertisseur (4).

10. Circuit convertisseur selon la revendication 1, dans lequel :
une puissance réactive peut être rendue disponible pour le réseau à moyenne tension en fonctionnement sous charge partielle.

11. Circuit convertisseur selon l'une des revendications précédentes, dans lequel :
au moins une cellule de convertisseur (4) est activée si la commande supérieure détecte une élévation de la tension de circuit intermédiaire, et au moins une cellule de convertisseur (4) est désactivée si la commande supérieure détecte une diminution de la tension de circuit intermédiaire.
